**Europäisches Patentamt**

**European Patent Office**

**Office européen des brevets**

(19)

(11) Veröffentlichungsnummer : **0 316 581 B1**

## (12) EUROPÄISCHE PATENTSCHRIFT

(45) Veröffentlichungstag der Patentschrift :
20.02.91 Patentblatt 91/08

(51) Int. Cl.⁵ : **F02M 41/12**

(21) Anmeldenummer : **88117009.6**

(22) Anmeldetag : **13.10.88**

(54) Kraftstoffeinspritzpumpe für Brennkraftmaschinen.

(30) Priorität : **19.11.87 DE 3739198**

(43) Veröffentlichungstag der Anmeldung :
**24.05.89 Patentblatt 89/21**

(45) Bekanntmachung des Hinweises auf die
Patenterteilung :
**20.02.91 Patentblatt 91/08**

(84) Benannte Vertragsstaaten :
**DE FR GB IT**

(56) Entgegenhaltungen :
DE-A- 1 910 112
DE-A- 2 929 176
DE-A- 3 500 305
GB-A- 2 079 007
US-A- 4 561 397

(56) Entgegenhaltungen :
MTZ-MOTORTECHNISCHE ZEITSCHRIFT,
Band 49, Nr. 1, Januar 1988, Seiten 37-41,
Stuttgart, DE; G. SCHWARZBAUER et al.:
"Digitale Diesel-Elektronik beim BMW-Turbodieselmodell 324td"
REVUE TECHNIQUE AUTOMOBILE, Band 37,
Nr. 424, Juli-August 1982, Seiten 108-110, Bou-
logne-Billancourt, FR; "PEUGEOT et la régulation électronique de l'injection Diesel"

(73) Patentinhaber : ROBERT BOSCH GMBH
Postfach 10 60 50
D-7000 Stuttgart 10 (DE)

(72) Erfinder : Fehlmann, Wolfgang
Im Steinengarten 25
D-7000 Stuttgart 80 (DE)
Erfinder : Geiger, Wolfgang
Rosenstrasse 11
D-7064 Remshalden-Grunbach (DE)

## Beschreibung

Kraftstoffeinspritzpumpe für Brennkraftmaschinen

Stand der Technik

Die Erfindung geht aus von einer Kraftstoffeinspritzpumpe für Brennkraftmaschinen der im Oberbegriff des Anspruchs 1 definierten Gattung.

Bei solchen Kraftstoffeinspritzpumpen wird mittels des elektrischen Stellwerks die pro Pumpenkolbenhub den Einspritzdüsen zugeführte und dort zur Einspritzung in die Verbrennungszylinder der Brennkraftmaschine gelangende Kraftstoffmenge hochgenau zugemessen. Es hat sich jedoch gezeigt, daß die zugemessene Kraftstoffmenge entscheidend von der Temperatur des geförderten Kraftstoffes abhängt und damit in relativ weiten Grenzen schwanken kann, so daß die Zumessung der optimalen Kraftstoffeinspritzmenge nicht zuverlässig gewährleistet ist.

Die Temperaturabhängigkeit der Kraftstoffeinspritzung läßt sich jedoch leicht kompensieren, wenn man die momentane Temperatur des vom Pumpenkolben aus dem Pumpeninnenraum geförderten Kraftstoffes mißt und diese als Korrekturgröße in der dem elektrischen Stellwerk zugeführten Steuergröße zur Betätigung des Mengenverstellorgans berücksichtigt.

Bei einer bekannten Kraftstoffeinspritzpumpe (DE-OS 29 29 176) gelangt über eine flüssigkeitsleitende Öffnung die gesamte Überströmmenge von ca. 30 l/h aus dem Pumpeninnenraum in den Stellwerkraum, von wo aus sie über das Überströmventil in den Kraftstoffrücklauf und damit wieder in den unter Atmosphärendruck stehenden Kraftstofftank zurückströmt. Hierbei findet eine ständige Durchströmung des Pumpeninnenraums und des Stellwerkraums statt, so daß die Kraftstofftemperatur in beiden Räumen immer etwa gleich groß ist. Da der Kraftstoff, insbesondere Dieselkraftstoff, meist mehr oder weniger große Wasseranteile enthält, kann Wasser an die spannungsführenden elektrischen Teile des Stellwerks gelangen, wo es bei längerer Anwesenheit Korrosion und Zerstörung stromführender Teile bewirkt.

Um dies zu vermeiden, ist bei der Kraftstoffeinspritzpumpe der eingangs genannten Art die flüssigkeitsleitende Öffnung als Drossel von wenigen μm² Öffnungsquerschnitt ausgebildet. Damit gelangt nur noch eine sehr kleine Kraftstoffmenge von ca. 30 cm³/h in den Stellwerkraum, deren Wasserkonzentration nur noch 10% der Wasserkonzentration des im Pumpeninnenraums befindlichen Kraftstoffs beträgt. Da die geringe Kraftstoffzuflußmenge nahezu keine Verwirbelung des Kraftstoffs im Stellwerkraum bewirkt, setzt sich das Wasser am Boden des Stellwerkraums ab und kann hier nicht mit stromführenden Teilen des elektrischen Stellwerks in Berührung kommen. Bei dieser Kraftstoffeinspritzpumpe ist damit der Stellwerkraum zwar mit Kraftstoff gefüllt, es findet jedoch keine nennenswerte Kraftstoffströmung statt, so daß die Temperatur des im Stellwerkraum befindlichen Kraftstoffs kein unmittelbares Maß für die Temperatur des tatsächlich vom Pumpenkolben aus dem Pumpeninnenraum geförderten Kraftstoffs ist.

Vorteile der Erfindung

Die erfindungsgemäße Kraftstoffeinspritzpumpe mit den kennzeichnenden Merkmalen des Anspruchs 1 hat den Vorteil, daß einerseits der Temperaturfühler an einer leicht zugänglichen Stelle sitzt und im Service leicht getauscht werden kann und anderseits eine schnelle Temperaturerfassung gewährleistet ist, wobei die erfaßte Temperatur der tatsächlichen Temperatur der vom Pumpenkolben geförderten Kraftstoffmenge entspricht. Der vom Pumpeninnenraum abgeleitete permanente Kraftstofffluß stellt einen ständigen Kraftstoffaustausch am Sensorelement des Temperaturfühlers sicher, so daß die hier herrschende Krafstofftemperatur durch Langzeiteinflüsse nicht verfälscht werden kann. Da der Kraftstofffluß unmittelbar und ständig aus dem Pumpeninnenraum entnommen wird, entspricht die Temperatur des Kraftstofflusses derjenigen, des vom Pumpenkolben zwecks Einspritzung aus dem Pumpeninnenraum in den Pumpenarbeitsraum geförderten Kraftstoffes. Selbst schnelle Temperaturänderungen werden damit zuverlässig von dem Temperaturfühler erfaßt und in der Steuergröße für das elektrische Stellwerk zum Einstellen des Mengenverstellorgans so berücksichtigt, daß Änderungen der Zumeßvolumina, der zur Einspritzung gelangenden Kraftstoffmengen infolge Temperaturänderungen wieder rückgängig gemacht werden. Dadurch, daß die elektrischen Anschlußleitungen auf die Leiter- oder Kontaktplatte im Stellwerkraum gelegt sind, die eine durch eine flüssigkeitsdichte Durchführung im Pumpengehäuse hindurchtretende elektrische Verbindung zu einem Steuergerät hat, entfällt jede zusätzliche Dichtstelle nach außen.

Die Gewinnung des Kraftstofflusses für den Temperaturfühler läßt sich auf verschiedene Weise realisieren, wie dies in vorteilhaften Ausführungsformen der Erfindung nachfolgend dargestellt ist.

Zeichnung

Die Erfindung ist anhand von in der Zeichnung dargestellten Ausführungsbeispielen in der nachfolgenden Beschreibung näher erläutert. Es zeigen :
Fig. 1 einen Längsschnitt einer Kraftstoff-Verteilereinspritzpumpe,
Fig. 2 eine vergrößerte Darstellung des Längsschnitts des Stellwerkraums mit Stellwerk der Kraftstoff-Verteilereinspritzpumpe in Fig. 1,
Fig. 3 eine vergrößerte Darstellung des Längsschnitts des am Stellwerk gemäß Fig. 2 angeordneten Temperaturfühlers,

Fig. 4 einen Längsschnitt eines Temperaturfühlers gemäß einem weiteren Ausführungsbeispiel
zum Einsatz in dem Stellwerk gemäß Fig. 2,

Fig. 5 ausschnittweise einen Längsschnitt eines
Stellwerks mit Temperaturfühler gemäß einem
zweiten Ausführungsbeispiel,

Fig. 6 ausschnittweise eine Unteransicht des
Keramikträgers des Temperaturfühlers in Fig. 5,

Fig. 7 ausschnittweise einen Längsschnitt eines
Stellwerks mit Temperaturfühler gemäß einem
dritten Ausführungsbeispiel,

Fig. 8 einen Längsschnitt eines Stellwerks mit
Temperaturfühler gemäß einem vierten Ausführungsbeispiel,

Fig. 9 einen Abschnitt eines Längsschnitt des
Stellwerkgehäuses mit darin angeordnetem Temperaturfühler, bei einem Stellwerk gemäß einem
fünften Ausführungsbeispiel,

Fig. 10 eine Seitenansicht des Temperaturfühlers

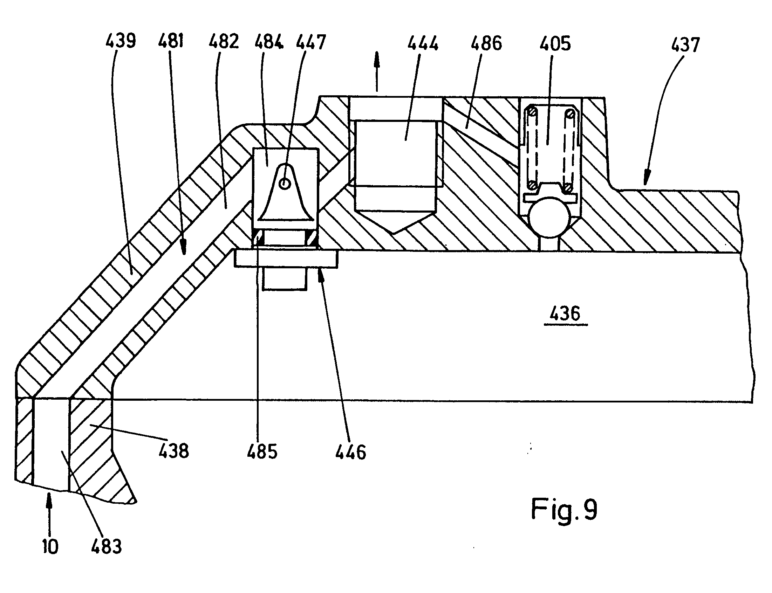

in Fig. 9,

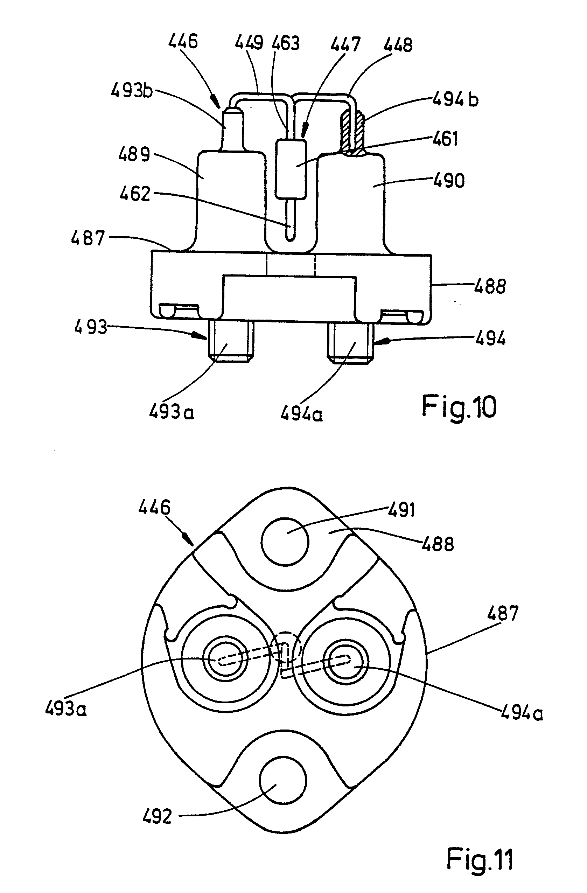

Fig. 11 eine Unteransicht des Temperaturfühlers
in Fig. 10,

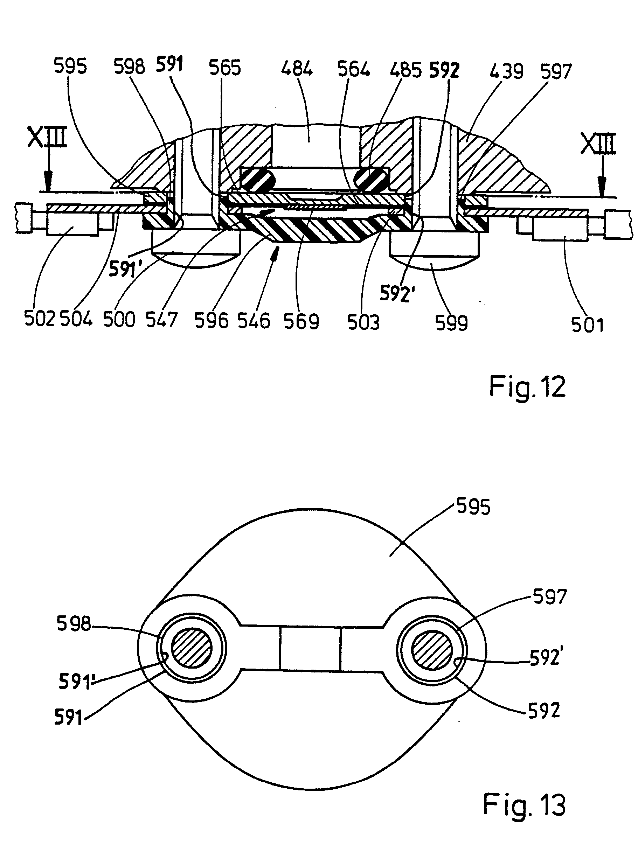

Fig. 12 einen Längsschnitt eines Temperaturfühlers gemäß einem weiteren Ausführungsbeispiel
zum Einsatz in das Pumpengehäuse gemäß Fig.
9,

Fig. 13 einen Schnitt des Temperaturfühlers längs
der Linie XIII-XIII in Fig. 12.

Beschreibung der Ausführungsbeispiele

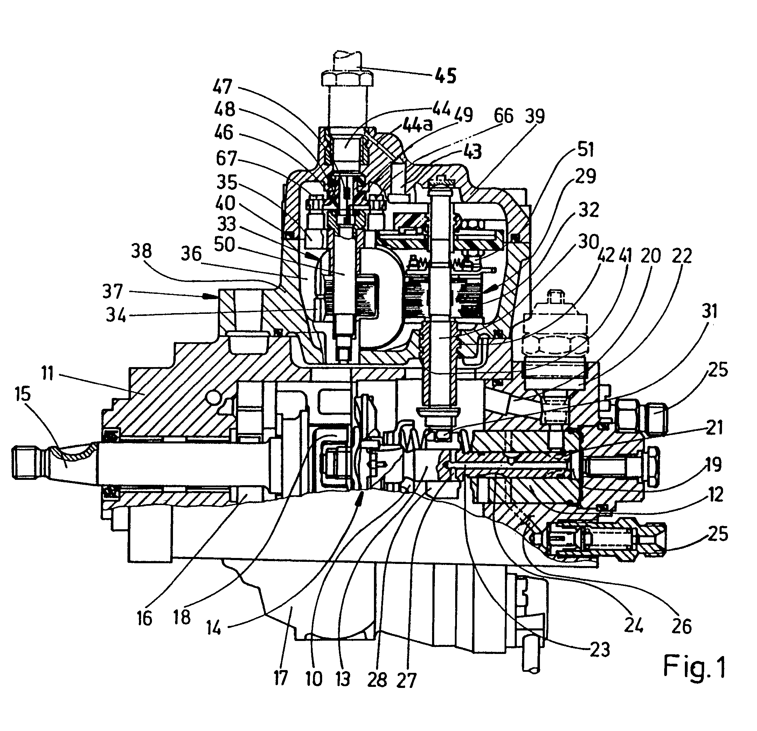

Bei der in Fig. 1 im Längsschnitt zu sehenden
Kraftstoffeinspritzpumpe der Verteilerbauart für eine
Brennkraftmaschine wird ein Pumpeninnenraum 10
von einem Pumpengehäuse 11 umschlossen. Im
Pumpengehäuse 11 ist in üblicher Weise ein Pumpenzylinder 12 eingesetzt, in welchem ein Verteilerkolben 13 geführt ist. Der Verteilerkolben 13 ist durch
einen Nockentrieb 14 und eine Antriebswelle 15 in eine Dreh-Hub-Bewegung versetzt. Die Antriebswelle
15 treibt gleichzeitig eine Förderpumpe 16, die über
eine nicht dargestellte Förderleitung Kraftstoff aus einem Kraftstofftank in den Pumpeninnenraum 10 fördert. Der Druck in dem Pumpeninnenraum wird durch
ein nicht dargestelltes Drucksteuerventil bestimmt,
welches den Druck drehzahlabhängig, und zwar mit
zunehmender Drehzahl steigend, steuert. Diese
Druckänderung wird durch einen hydraulischen
Druckversteller 17 in an sich bekannter Weise in eine
Verdrehbewegung eines Rollenrings 18 des Nockentriebs 14 umgesetzt und damit der Spritzbeginn der
Kraftstoffeinspritzpumpe mit steigender Drehzahl in
Richtung "früh" verstellt.

Der Verteilerkolben 13 begrenzt im Pumpenzylinder 12 stirnseitig einen Pumpenarbeitsraum oder
Hochdruckraum 19, der während des Abwärtshubs des Verteilerkolbens 13 über einen Saugkanal 20 und
eine in der Mantelfläche des Verteilerkolbens 13 angeordnete Längsnut 21 mit Kraftstoff aus dem Pumpeninnenraum 10 versorgt wird. Der Saugkanal 20 ist
durch ein Magnetventil 22 gesteuert, das stromlos
geschlossen ist. Während des Druckhubs des Verteilerkolbens 13, also während dessen Aufwärtsbewegung, gelangt dann der Kraftstoff aus dem
Hochdruckraum 19 über eine Zentralbohrung 23 zu
einer Verteilernut 24, die in aufeinanderfolgenden
Druckhüben nacheinander zu Einspritzdüsen 25 führende Druckleitungen 26 aufsteuert. Die Zentralbohrung 23 mündet in einer radialen Steuerbohrung 27,
welche nach Zurücklegen eines bestimmten Hubs
aus einem Steuerschieber 28 austaucht und damit eine Verbindung zwischen dem Hochdruckraum 19 und
dem Pumpeninnenraum 10 herstellt, wodurch die
Kraftstoffeinspritzung durch den Verteilerkolben 13
beendet wird. Der Steuerschieber 28 legt damit die
momentane Einspritzmenge fest und wirkt als Mengenverstellorgan.

Der Steuerschieber 28 sitzt axial verschieblich
auf dem Verteilerkolben 13, und zwar auf demjenigen
Kolbenabschnitt, der im Pumpeninnenraum 10 verläuft. Zur axialen Verschiebung des Steuerschiebers
28 ist ein elektromagnetisches Stellwerk 29 vorgesehen, das über eine Stellwelle 30 und einen auf der
Stirnseite der Stellwelle 30 angeordneten Exzenter
31 an dem Steuerschieber 28 angreift. Die Stellwelle
30 ist mit dem Anker 32 eines Drehmagneten 33 starr
verbunden, so daß eine Drehung des Ankers 32 über
den Exzenter 31 in eine Verschiebung des Steuerschiebers 28 umgesetzt wird. Der Drehmagnet 33
wird über eine Spule 34 auf einem U-förmigen Kern
erregt. Die Spulenanschlüsse sind auf einer Leiterplatte 35 kontaktiert, von wo aus eine nicht dargestellte elektrische Verbindungsleitung druckdicht
nach außen führt.

Das elektromagnetische Stellwerk 29 ist in einem
vom Pumpeninnenraum 10 getrennten Stellwerkraum 36 angeordnet und an einem Stellwerkgehäuse 37 befestigt, das an dem Pumpengehäuse 11
angeflanscht ist und den Stellwerkraum 36
umschließt. Das Stellwerkgehäuse 37 ist zweiteilig
ausgebildet und besteht aus einem schalenförmigen
Grundgehäuse 38, das flüssigkeitsdicht gegenüber
dem Pumpeninnenraum abgedichtet ist und aus einem das Grundgehäuse 38 abschließenden Deckel
39. Der Deckel 39 ist am Grundgehäuse 38 verschraubt und kann zu Servicezwecken abgenommen
werden. Eine Ringdichtung 40 verhindert Austreten
von Kraftstoff an der Grenzstelle von Grundgehäuse
38 und Deckel 39. Im Grundgehäuse 38 ist eine Bohrung 41 vorgesehen, in welcher ein Lagerstutzen 42
eingegossen ist, der bis in den Pumpeninnenraum 10
hineinragt. Durch den eine Gleitbuchse bildenden
Lagerstutzen 42 ist die Stellwelle 30 mit Radialspiel
hindurchgeführt, so daß zwischen der Stellwelle 30 und der Innenwand des Lagerstutzens 42 ein Lagerspalt entsteht, der eine Drossel zwischen dem Pumpeninnenraum 10 und dem Stellwerkraum 36 darstellt. Sowohl der Pumpeninnenraum 10 als auch der Stellwerkraum 36 sind über ein Überströmventil an einem zum Kraftstofftank angeschlossenen Kraftstoffrücklauf angeschlossen. Während auf die Darstellung des Überströmventils für den Pumpeninnenraum 10 verzichtet ist, ist das Überströmventil im Stellwerkraum 36 mit 43 bezeichnet. Es ist im Deckel 39 eingeschraubt und über eine Bohrung 44a mit einer Überlauföffnung 44 verbunden, an die ein zum Kraftstofftank führender Kraftstoffrücklauf 45 angeschlossen ist. Im Pumpeninnenraum 10 steht der Kraftstoff unter einem Förderdruck von ca. 3-8 bar. Über das dortige Überströmventil fließt eine Kraftstoffmenge von ca. 30 l/h in den Kraftstofftank. Im Stellwerkraum herrscht ein Druck von ca. 0,5 bar. Durch den Druckunterschied fließt über die Drossel 30/42 in den kraftstoffgefüllten Stellwerkraum 36 eine sehr kleine Kraftstoffmenge von ca. 30 cm³/h. Eine gleich große Kraftstoffmenge fließt über das Überströmventil 43 in den Kraftstoffrücklauf 45.

Zur Kompensation des Temperatureinflusses auf die vom Verteilerkolben 13 beim Förderhub geförderte Kraftstoffmenge, die beim Druckhub zur Einspritzung in die Einspritzdüsen 25 gelangt, ist im Stellwerkraum 36 ein elektrischer Temperaturfühler 46 vorgesehen, der mit einem temperaturempfindlichen Sensorelement 47 in einen vom Pumpeninnenraum 10 abgeleiteten permanenten Kraftstofffluß mittelbar oder unmittelbar eintaucht. Der Kraftstofffluß soll dabei etwa eine Strömungsgeschwindigkeit aufweisen, die in etwa dem Kraftstoffaustausch im Pumpeninnenraum von ca. 30 l/h entspricht. Die elektrischen Anschlußleitungen des Temperaturfühlers 46 sind auf die Leiterplatte 35 geführt und dort kontaktiert.

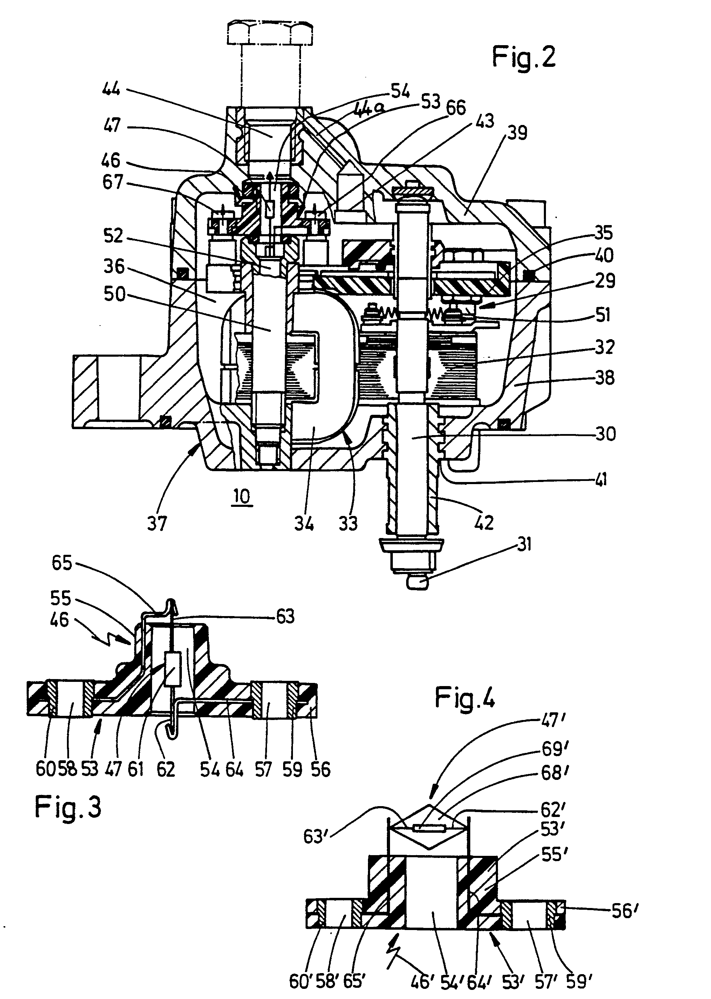

Das in Fig. 1 dargestellte Stellwerkgehäuse 37 mit Stellwerkraum 36 und Stellwerk 29 sowie mit Temperaturfühler 46 ist in Fig. 2 im Längsschnitt vergrößert dargestellt.

Eine Vergrößerung des längsgeschnittenen Temperaturfühlers 46 zeigt Fig. 3. Das Stellwerk 29 ist insgesamt mittels als Stehbolzen ausgebildeter Befestigungsschrauben, von denen nur die Befestigungsschrauben 50,51 zu sehen sind, am Grundgehäuse 38 gehalten. Die aus Kunststoff bestehende Leiterplatte 35 ist auf die Stehbolzen aufgesetzt und mit Kontermuttern befestigt. Dabei ragt die Befestigungsschraube 50 mit ihrem Schaftende durch das Grundgehäuse 38 hindurch bis in den Pumpeninnenraum 10. Sie weist eine axiale Durchgangsbohrung 52 auf, die am Schaftende und Schaftkopf frei austritt. Der Temperaturfühler 46 besteht aus einem innen hohlen Verbindungsstück 53 aus Isoliermaterial, das die Stirnseite der Befestigungsschraube 50 mit der Überlauföffnung 44 im Deckel 39 druckdicht verbindet. Der Innenhohlraum 54 des Verbindungsstücks 53 bildet dabei zusammen mit der Durchgangsbohrung 52 einen Strömungskanal, durch welchen Kraftstoff aus dem Pumpeninnenraum 10 in den Kraftstoffrücklauf 45 abfließen kann. Im Strömungskanal ist das Sensorelement 47 des Temperaturfühlers 46 angeordnet, das damit ständig von einem Kraftstoffstrom umspült wird.

Bei dem in Fig. 3 im Längsschnitt vergrößert dargestellten Temperaturfühler 46 ist das Verbindungsstück 53 im Profil T-förmig ausgebildet und weist einen hohlzylindrischen Teil 55 und einen damit einstückigen radialen Ringflansch 56 auf. Das Verbindungsstück 53 ist aus Kunststoff gefertigt. Im Ringflansch 56 sind zwei axiale Durchgangsbohrungen 57, 58 zueinander diametral angeordnet, in welchen jeweils eine Anschlußhülse 59, 60 aus elektrisch leitendem Material eingesetzt ist. Das im Innenhohlraum 54 des hohlzylindrischen Teils 55 angeordnete Sensorelement 47 ist als NTC-Widerstand 61 ausgebildet, der axial ausgerichtet ist und mit seinen Anschlußenden 62, 63 aus dem Innenhohlraum 54 vorsteht. Jedes Anschlußende 62 bzw. 63 ist mit einer Anschlußfahne 64 bzw. 65 verlötet oder verschweißt. Die Anschlußfahnen 64, 65 sind elektrisch leitend mit jeweils einer Anschlußhülse 59, 60 verbunden und verlaufen im Innern des Verbindungsstückes 53. Beide Anschlußfahnen 64, 65 verlaufen von den Anschlußhülsen 59, 60 ausgehend dabei zunächst radial im Ringflansch 56. Die Anschlußfahne 64 tritt dann im Innenhohlraum 54 und die Anschlußfahne 56 an der vom Ringflansch 56 abgekehrten Stirnseite des hohlzylindrischen Teils 55 aus. Wie aus Fig. 2 ersichtlich, ist das Verbindungsstück 53 auf der Leiterplatte 35 befestigt. Hierzu sind zwei zugleich der elektrischen Kontaktierung dienende Montageschrauben 66, 67 durch die Durchgangsbohrungen 57, 58 hindurchgesteckt und in entsprechenden Gewindehülsen in der Leiterplatte 35 verschraubt. Beim Durchtritt durch die Durchgangsbohrungen 57, 58 gelangen die Montageschrauben 66, 67 in elektrischen Kontakt mit den Anschlußhülsen 59, 60, wodurch der NTC-Widerstand 61 in einen elektrischen Stromkreis eingeschaltet ist.

Bei dem in Fig. 4 im Längsschnitt dargestellten Temperaturfühler 46', der anstelle des Temperaturfühlers 46 nach Fig. 3 in das Stellwerk in Fig. 2 eingesetzt werden kann, ist das Sensorelement 47' als Keramikplättchen 68' mit aufgedrucktem NTC-Dickschichtwiderstand 69' ausgebildet. Das nahezu die gleiche Form aufweisende Verbindungsstück 53' besteht wiederum aus dem hohlzylindrischen Teil 55' und dem damit einstückigen radialen Ringflansch 56', in welchem wiederum mit Anschlußhülsen 59', 60' ausgekleidete axiale Durchgangsbohrungen 57', 58' vorgesehen sind. Von den Anschlußhülsen 59', 60' ausgehend verlaufen Anschlußfahnen 64', 65' zunächst radial im Ringflansch 56' und dann axial im

hohlzylindrischen Teil 55', um an der von dem Ringflansch 56' abgekehrten Stirnseite des hohlzylindrischen Teils 55' axial vorzustehen. Mit diesen Vorstehenden ist der NTC-Dickschichtwiderstand 69' verlötet. Der Temperaturfühler 46' gemäß Fig. 4 wird in gleicher Weise an der Leiterplatte 65 befestigt, wie dies für den Temperaturfühler 46 in Fig. 2 dargestellt ist.

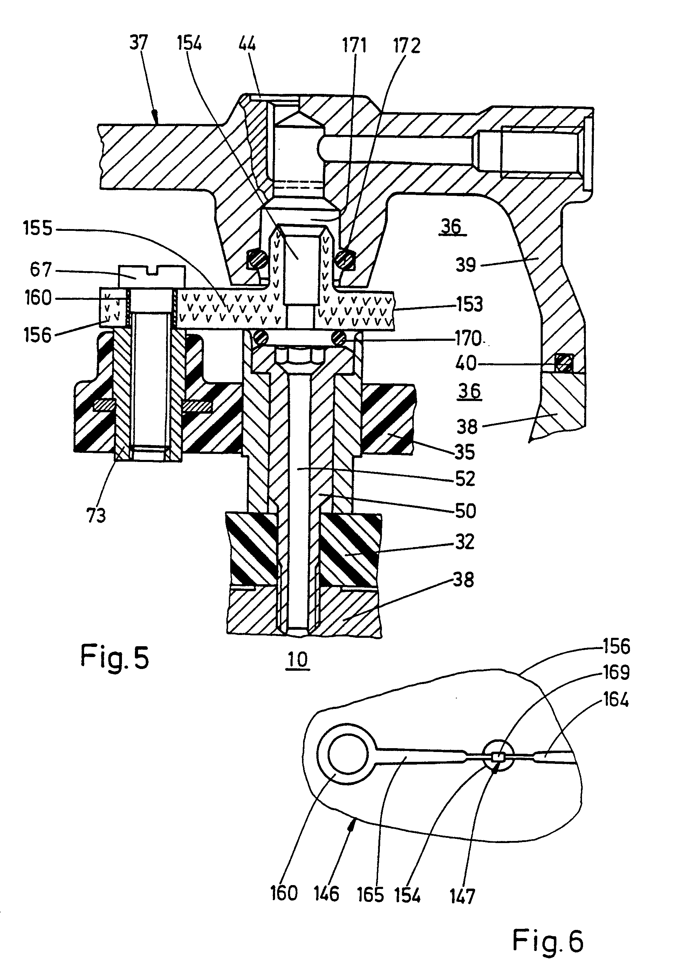

In Fig. 5 ist ein bezüglich der Ausführung des Temperaturfühlers 146 modifiziertes Stellwerk im Längsschnitt abschnittweise dargestellt. Der gezeigte Abschnitt umfaßt in etwa den Bereich um die Befestigungsschraube 50 herum. Bis auf die nachfolgend noch im einzelnen beschriebene Modifikation stimmt ansonsten das Stellwerk mit dem in Fig. 2 überein, so daß identische Bauteile, soweit sie dargestellt sind, mit gleichen Bezugszeichen versehen sind.

Das hier aus Keramik hergestellte Verbindungsstück 153 des Temperaturfühlers 146 überdeckt wiederum die Stirnseite der Befestigungsschraube 50, wobei eine Ringdichtung 170 für eine druckdichte Verbindung sorgt. Das wiederum T-förmig ausgebildete Keramik-Verbindungsstück 153 greift mit seinem hohlzylindrischen Teil 155 in eine im Durchmesser abgestufte Sackbohrung 171 im Deckel 39 des Stellwerkgehäuses 37. Die Sackbohrung 171 ist mit der Überlauföffnung 44 verbunden. Eine zweite Ringdichtung 172 sorgt ebenfalls für eine druckdichte Verbindung zwischen Verbindungsstück 153 und Sackbohrung 171. In gleicher Weise wie in Fig. 3 und 4 sind in dem mit dem hohlzylindrischen Teil 155 einstückigen Ringflansch 156 mit Anschlußhülsen ausgekleidete axiale Durchgangsbohrungen zur Befestigung des Verbindungsstückes 153 an der Leiterplatte 35 vorgesehen. Von den beiden Durchgangsbohrungen mit Anschlußhülsen sind in Fig. 5 nur die linke Durchgangsbohrung 158 mit Anschlußhülse 160 zu sehen. Durch jede Durchgangsbohrung ist wiederum eine Montageschraube hindurchgesteckt, welche die Anschlußhülse kontaktiert und in einer Gewindehülse 73 in der Leiterplatte 35 verschraubt ist. In Fig. 5 ist die Montageschraube 67 dargestellt. Durch die Durchgangsbohrung 52 der Befestigungsschraube 50 und den Innenhohlraum 154 des Keramik-Verbindungsstückes 153 wird wiederum ein Strömungskanal zwischen Pumpeninnenraum 10 und Überlauföffnung 44 gebildet, in welchem das Sensorelement 147 des Temperaturfühlers 146 angeordnet ist. Wie in Fig. 6 zu sehen ist, ist dabei das Sensorelement 147 als NTC-Dickschichtwiderstand 169 ausgebildet, der auf der vom hohlzylindrischen Teil 155 abgekehrten Stirnfläche des Ringflansches 156 aufgebracht ist und die Öffnung des Innenhohlraums 154 überspannt. Die Anschlußfahnen 164 und 165 zwischen dem NTC-Dickschichtwiderstand 169 und den beiden Anschlußhülsen 60 sind als auf der Stirnfläche des Ringflansches 156 aufgedruckte Leiterbahnen 165, 164 ausgebildet.

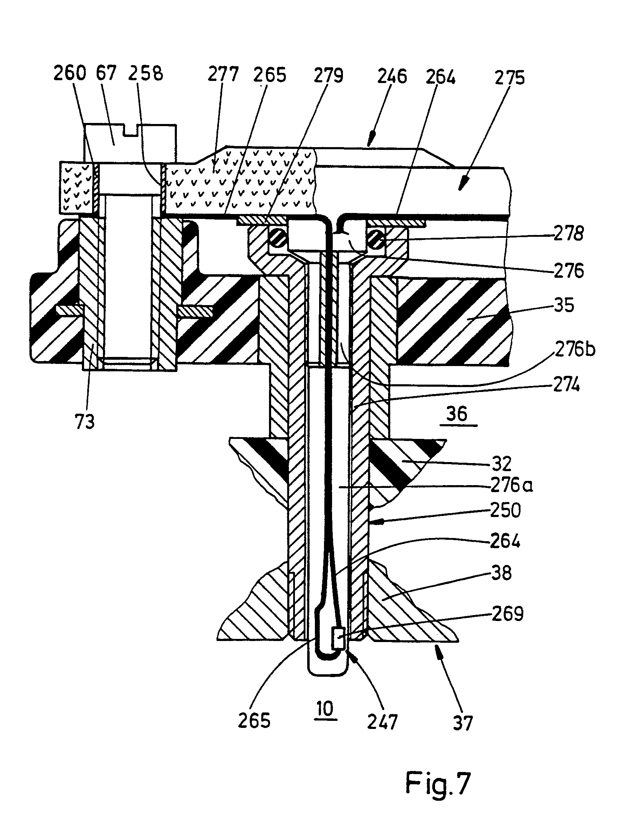

Bei dem in Fig. 7 abschnittweise dargestellten Stellwerk ist die eine, das Stellwerk am Stellwerkgehäuse 37 befestigende Befestigungsschraube 250 als Schraubhülse 274 ausgebildet, die mit ihrem Hülsenende in dem Pumpeninnenraum 10 hineinragt. Der Temperaturfühler 246 weist einen im Profil T-förmigen Keramikträger 275 mit einem axialen Mittelteil 276 und einem damit einstückigen Quersteg 277 auf. Das Mittelteil 276 ist durch die Schraubhülse 274 hindurchgeführt und steht am Hülsenende über dieses axial vor. Der radiale Quersteg 277 überdeckt die vom Hülsenende abgekehrte Stirnseite der Schraubhülse 274, wobei eine zwischen dem Mittelteil 276 und der Innenwand der Schraubhülse 274 eingelegte Ringdichtung 278 für einen druckdichten Verschluß der Schraubhülse 274 sorgt. Der Quersteg 277 des Keramikträgers 275 weist im radialen Abstand zum Mittelteil 276 zwei Durchgangsbohrungen auf, die jeweils mit einer elektrisch leitenden Anschlußhülse ausgekleidet sind. In Fig. 7 sind von den beiden diametralen Durchgangsbohrungen nur die linke Durchgangsbohrung 258 und die darin eingesetzte Anschlußhülse 260 zu sehen. Wie bei den Temperaturfühlern gemäß Fig. 2 und 5 ist durch jede Durchgangsbohrung 258 eine gleichzeitig der elektrischen Kontaktierung dienende Montageschraube 67 hindurchgeführt, die zur Befestigung des Keramikträgers 275 in einer Gewindehülse 73 in der Leiterplatte 35 verschraubt ist. Auf dem aus dem Hülsenende der Schraubhülse 274 herausragenden Ende des Mittelteils 276 des Keramikträgers 275 ist das Sensorelement 247 des Temperaturfühlers 246 in Form eines NTC-Dickschichtwiderstandes 269 aufgedruckt. Von hier aus führen aufgedruckte Leiterbahnen 264 und 265 zu jeweils einer Anschlußhülse 260. Die Leiterbahnen 264, 265 verlaufen zunächst auf dem abgeflachten unteren Teilabschnitt 276a des Mittelteils 276, führen dann entlang des oberen Mittelteilabschnittes 276b und verlaufen dann auf der Unterseite des Quersteges 277 und umschließen die Durchgangsbohrung 258. Die elektrische Verbindung erfolgt direkt auf die Gewindehülse 73. Um einen elektrischen Kontakt zwischen den Leiterbahnen 264, 265 und der Schraubhülse 274 zu vermeiden, ist zwischen der Stirnseite der Schraubhülse 274 und der Unterseite des Quersteges 277 eine Isolierscheibe 279 angeordnet.

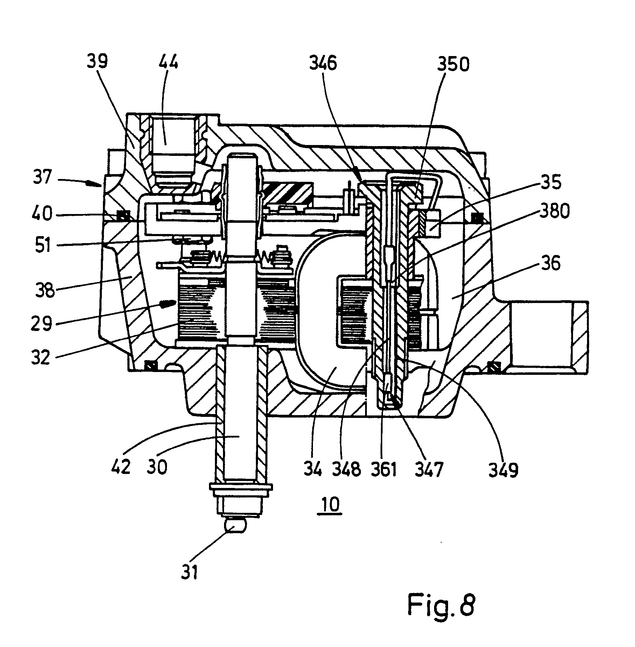

Das in Fig. 8 dargestellte Stellwerk 29 stimmt identisch mit dem in Fig. 2 überein, so daß gleiche Bauteile mit gleichen Bezugszeichen versehen sind. Lediglich die eine Befestigungsschraube 350 ist zur Aufnahme des Temperaturfühlers 346 modifiziert. In gleicher Weise wie in Fig. 2 durchdringt die Befestigungsschraube 350 endseitig das Grundgehäuse 38 des Stellwerkgehäuses 37 und ragt in den Pumpeninnenraum 10 hinein. Die Befestigungsschraube 350 ist mit einer an der Stirnseite des Schraubenkopfes mündenden axialen Sackbohrung 380 versehen, die bis nahe an das Schaftende reicht. In der Sackbohrung 380 ist der Temperaturfühler 346 angeordnet, wobei das Sensorelement 347 als NTC-Widerstand 361 ausgebildet ist, dessen Anschlußenden über im Innern der Sackbohrung 380 verlaufende und stirnseitig aus der Befestigungsschraube 350 austretende Anschlußleitungen 348 und 349 auf der Leiterplatte 35 kontaktiert sind. Bei dieser Ausbildung des Temperaturfühlers 346 müssen geringe Fehler bei der Temperaturerfassung in Kauf genommen werden, da das Sensorelement 347 nicht unmittelbar von dem Kraftstoff im Pumpeninnenraum 10 umströmt wird, sondern noch die Wärmeleitung durch das Schaftende hindurch berücksichtigt werden muß. Wie bei den vorhergehend beschriebenen Temperaturfühlern ist aber die unmittelbare Kontaktierung des Temperaturfühlers 347 auf der Leiterplatte 35 beibehalten.

Bei dem in Fig. 9 abschnittweise dargestellten Stellwerkgehäuse 437, von welchem lediglich ein Teil des Deckels 439 und des Grundgehäuses 438 zu sehen sind, ist zur Erzielung eines Kraftstoffflusses für den Temperaturfühler 447 ein um den Stellwerkraum 436 herumführender Strömungskanal 481 für den Kraftstoff vorgesehen, der einerseits im Pumpeninnenraum 10 und andererseits in der im Deckel 439 angeordneten Überlauföffnung 444 mündet. Der Strömungskanal 481 setzt sich zusammen aus einer im Deckel 439 bis hin zur Überlauföffnung 444 verlaufenden Bohrung 482 und einer im Grundgehäuse 438 sich fortsetzenden, im Pumpeninnenraum 10 mündenden Bohrung 483. Die im Deckel 439 verlaufende Bohrung 482 führt durch eine Aufnahmekammer 484 hindurch, die als Sackbohrung von der Innenseite des Deckels 439 her eingebracht ist. In die Aufnahmekammer 484 ist ein Temperaturfühler 446 eingesetzt, der mit seinem Sensorelement 447 innerhalb der Aufnahmekammer 484 im Kraftstofffluß liegt. Der Temperaturfühler 446 ist so ausgebildet, daß er nach Einsetzen die Aufnahmekammer 484 abdeckt. Eine Ringdichtung 485 sorgt für die druckdichte Abdichtung der Aufnahmekammer 484. Wie aus Fig. 9 ersichtlich, ist im Deckel 439 noch ein Rückschlagventil 405 angeordnet, das über eine Querbohrung 486 mit der über das Überströmventil an den Kraftstoffrücklauf angeschlossenen Überlauföffnung 444 in Verbindung steht. Durch das Rückschlagventil 405 kann der Druck im Stellwerkraum 436 unabhängig von dem mit dem Strömungskanal 481 verbundenen Überströmventil eingestellt werden.

Der Aufbau des Temperaturfühlers 446 ist in Fig. 10 und 11 im einzelnen dargestellt. Er besteht aus einem Isolierstoffkörper 487, der einen Befestigungsflansch 488 und zwei davon im Abstand voneinander axial vorspringende, mit dem Befestigungsflansch 488 einstückige Höcker 489 und 490 aufweist. Der Befestigungsflansch 488 trägt zwei Durchgangsbohrungen 491 und 492 (Fig. 11), durch welche Befestigungsschrauben zum Verschrauben des Temperaturfühlers 446 am Deckel 439 hindurchsteckbar sind. Die Höcker 489 und 490 umschließen jeweils einen von zwei Kontaktstiften 493 bzw. 494, die einerseits an der Stirnseite der Höcker 489, 490 und andererseits auf der von den Höckern 489, 490 abgekehrten Stirnseite des Befestigungsflansches 488 axial vorstehen. Die letztgenannten Vorstehenden 493a und 494a der Kontaktstifte 493, 494 bilden Steckstifte für als Steckhülsen ausgebildete Kabelschuhe, die mit nicht dargestellten Kabeln verbunden sind, die ihrerseits zur Kontaktierung des Temperaturfühlers 446 auf die Leiterplatte 35 des Stellwerks 29 (Fig. 1) geführt sind. Das Sensorelement 447 des Temperaturfühlers 446 ist wiederum als NTC-Widerstand 461 ausgebildet, der axial ausgerichtet zwischen den Höckern 489 und 490 angeordnet ist. Die Anschlußenden 462 und 463 des NTC-Widerstandes sind mit Anschlußleitungen 448, 449 verbunden, die in die beiden Vorstehenden 493b und 494b der Kontaktstifte 493, 494 eingesteckt und dort z.B. durch Quetschung oder Verlöten elektrisch und mechanisch mit den Kontaktstiften 493, 494 verbunden sind.

Anstelle des in Fig. 10 und 11 dargestellten Temperaturfühlers 446 kann in die Aufnahmekammer 484 in Fig.9 auch ein Temperaturfühler 546 eingesetzt werden, wie er in Fig. 12 und 13 im Detail dargestellt ist. Der in Fig. 12 im Längsschnitt dargestellte Temperaturfühler 546 weist eine Edelstahlplatte 595 mit Emaillebeschichtung und eine die Edelstahlplatte 595 auf der Beschichtungsseite mit geringem Abstand überdeckende Isolierplatte 596 auf. Die Edelstahlplatte 595 und die Isolierplatte 596 weisen jeweils zwei Durchgangsbohrungen 591, 592 bzw. 591' bzw. 592' auf, von denen jeweils zwei Durchgangsbohrungen 591 bzw. 591' und 592 bzw. 592' miteinander fluchten. Die Durchgangsbohrungen 591', 592' in der Isolierplatte 596 sind von je einem zylindrischen Vorsprung 597 bzw. 598 umgeben, der in die zugeordnete Durchgangsbohrung 591 bzw. 592 in der Edelstahlplatte 595 hineinragt. Durch die miteinander fluchtenden Durchgangsbohrungen 591, 591' und 592, 592' sind Befestigungsschrauben 599 bzw. 500 gesteckt, mit welchen der Temperaturfühler 546 am Deckel 439 des Stellwerkgehäuses 437 (Fig. 9) in einer solchen Weise befestigt wird, daß die Edelstahlplatte 595 die Öffnung der Aufnahmekammer 484 abdeckt. Die Ringdichtung 485 sorgt wiederum für einen druckdichten Verschluß der Aufnahmekammer 484. Das Sensorelement 547 des Temperaturfühlers 546 ist als NTC-Dickschichtwiderstand 569 auf der emaillebeschichteten Seite der Edelstahlplatte 595 aufgebracht und zwar im Abdeckungsbereich der Aufnahmekammer 484 durch die Edelstahlplatte 595. Der Dickschichtwiderstand 569 ist mit zwei auf der Emaillebeschichtung verlaufenden Leiterbahnen 564 und 565, die aus Goldresinat gefertigt sind, verbunden. Diese Leiterbahnen 564 und 565 erstrecken sich um die Durchgangsbohrungen 491 und 492 in der Edelstahlplatte 495 herum. Zwischen der Edelstahlplatte 495 und der Isolierplatte 596 sind jeweils zwei Kabelschuhe 501 und 502 eingespannt, die mit Ösen 503 und 504 die Vorsprünge 597 und 598 an der Isolierplatte 596 umgreifen. Durch die Befestigungsschrauben 599 und 500 werden die Kabelschuhe 501 und 502 mit ihren Ösen 503 und 504 auf die Leiterbahnen 564, 565 aufgepreßt und mit diesen elektrisch kontaktiert. Die mit den Kabelschuhen 501 und 502 verbundenen, nicht dargestellten Anschlußleitungen sind wiederum zur Leiterplatte 35 des Stellwerks 29 (Fig. 1) geführt, so daß die Kontaktierung des Temperaturfühlers 546 wiederum auf der Leiterplatte 35 vorgenommen ist.

Fig. 13 zeigt einen Schnitt des Temperaturfühlers 547 gemäß Linie XIII-XIII in Fig. 12.

## Ansprüche

1. Kraftstoffeinspritzpumpe für Brennkraftma-schinen mit einem in einem Pumpengehäuse enthaltenen Pumpeninnenraum (10), der mit unter Druck stehendem Kraftstoff gefüllt ist, der beim Saughub eines einen Pumpenarbeitsraum begrenzenden Pumpenkolbens (13) dem Pumpenarbeitsraum (19) zugeführt wird, mit einem im Pumpeninnenraum angeordneten Mengenverstellorgan (28) zur Steuerung der vom Pumpenkolben unter Hochdruck geförderten Kraftstoffeinspritzmenge, mit einem vom Pumpeninnenraum getrennten und nur über eine Drosselstelle mit diesem verbundenen, kraftstoffgefüllten Stellwerkraum (36, 436), der über eine Überlauföffnung    mit    einer    Entlastungsleitung, vorzugsweise einem zum Kraftstofftank führenden Kraftstoffrücklauf, verbunden ist, mit einem im Stellwerkraum angeordneten elektrischen Stellwerk (29) zum Betätigen des Mengenverstellorgangs, wobei die elektrischen Stellwerkanschlüsse auf einer Leiterplatte im Stellwerkraum kontaktiert sind, dadurch gekennzeichnet, daß im Stellwerkraum (36 ; 436) ein elektrischer Temperaturfühler (46 ; 146 ; 246 ; 346 ; 446 ; 546) mit einem temperaturempfindlichen Sensorelement (47 ; 147 ; 247 ; 347 ; 447 ; 547), vorzugsweise NTC-Widerstand, angeordnet ist, der mit zumindest seinem Sensorelement (47-547) in einen vom Pumpeninnenraum (10) abgeleiteten permanen-ten Kraftstofffluß mittel- oder unmittelbar eintaucht, und daß die elektrischen Anschlußleitungen des Temperaturfühlers (46-546) zu der Leiterplatte (35) geführt und dort kontaktiert sind.

2. Pumpe nach Anspruch 1, dadurch gekennzeichnet, daß das Stellwerk (29) mittels Befestigungsschrauben (50, 51) am Pumpengehäuse (11), vorzugsweise an einem den Stellwerkraum (36) umschließenden, die Überlauföffnung (44) enthaltenden Stellwerkgehäuse (37), gehalten ist, daß eine der Befestigungsschrauben (50) mit ihrem Schaftende in dem Pumpeninnenraum (10) hineinragt und eine axiale Durchgangsbohrung (52) aufweist, daß der Temperaturfühler (46 ; 46' ; 146) ein zwischen der Stirnseite des Schraubenkopfes und der Überlauföffnung (44) druckdicht angeordnetes hohles Verbin-dungsstück (53 ; 53' ; 153) aufweist, dessen Innenhohlraum (54 ; 54' ; 154) zusammen mit der Durchgangsbohrung (52) einen Strömungskanal für den Kraftstoff bildet, und daß das Sensorelement (47 ; 47' ; 147) des Temperaturfühlers (46 ; 46' ; 146) im Strömungskanal angeordnet ist (Fig. 2-6).

3. Pumpe nach Anspruch 2, dadurch gekennzeichnet, daß die Achsen von Überlauföffnung (44), Verbindungsstück (53 ; 53' ; 153) und der hohlen Befestigungsschraube (50) fluchten, daß das Verbin-dungsstück (53 ; 53' ; 153) im Profil etwa T-förmig ausgebildet ist und einen hohlzylindrischen Teil (55 ; 55' ; 155) und einen damit einstückigen radialen Ringflansch (56 ; 56' ; 156) aufweist, in welchem axiale Durchgangsbohrungen (57, 58 ; 57' 58' ; 158) vorgesehen sind, und daß das Verbindungsstück (53 ; 53' ; 153) mittels zweier durch die Durchgangsboh-rungen (57, 58 ; 57', 58' ; 158) hindurchgeführter Montageschrauben (66, 67) auf der Leiterplatte (35) befestigt ist (Fig. 2-6).

4. Pumpe nach Anspruch 3, dadurch gekennzeichnet, daß in den Durchgangsbohrungen (57, 58 ; 57', 58' ; 158) elektrisch leitende Anschlußhülsen (59, 60 ; 59', 60' ; 160) eingesetzt sind, die mit Anschlußfahnen (64, 65 ; 64', 65' ; 164, 165) für das Sensorelement (47 ; 47' ; 147) verbunden sind und mit den zugleich der elektrischen Kontaktierung dienenden Montageschrauben (66, 67) in Berührung stehen (Fig. 2-6).

5. Pumpe nach Anspruch 4, dadurch gekennzeichnet, daß das Verbindungsstück (53) als Isolierstoffkörper ausgebildet ist, daß die Anschlußfahnen (64, 65) im Innern des Ringflansches (56) verlaufen und in dem Innenhohlraum (54) bzw. an der Stirnseite des hohlzylindrischen Teils (55) austreten und dort mit den Anschlußenden (62, 63) eines das Sensorelement (47) bildenden, axial ausgerichteten NTC-Widerstandes (61) verschweißt sind (Fig. 3).

6. Pumpe nach Anspruch 4, dadurch gekennzeichnet, daß das Verbindungsstück (53') als Isolierstoffkörper ausgebildet ist, daß die Anschlußfahnen (64', 65') im Innern des Isolierkörpers zunächst radial im Ringflansch (56') und dann axial im hohlzylindri-schen Teil (55') verlaufen und auf einer, vorzugsweise auf der vom Ringflansch (56') abgekehrten Stirnseite des hohlzylindrischen Teils (55') axial vor-stehen und daß das Sensorelement (47') als ein auf einem Keramikplättchen (68') angeordneter NTC-Dickschichtwiderstand (69') ausgebildet ist, dessen als Leiterbahnen ausgebildete Anschlußenden (62', 63') mit den Vorstehenden der Anschlußfahnen (64', 65') verbunden sind (Fig. 4).

7. Pumpe nach Anspruch 4, dadurch gekennzeichnet, daß das Verbindungsstück (153) als Keramikkörper ausgebildet ist und daß auf der von dem hohlzylindrischen Teil (155) abgekehrten Stirnfläche des radialen Ringflansches (156) die Anschlußfahnen (164, 165) als radial verlaufende Leiterbahnen und das Sensorelement (147) als die Öffnung der axialen Durchgangsbohrung (52) der Befestigungsschraube (50) überspannender Dickschichtwiderstand (169) aufgebracht sind (Fig. 5 und 6).

8. Pumpe nach Anspruch 1, dadurch gekennzeichnet, daß das Stellwerk (29) mittels Befestigungsschrauben (50, 51) am Pumpengehäuse (11), vorzugsweise an einem den Stellwerkraum (36) umschließenden Stellwerkgehäuse (37), gehalten ist, daß eine der Befestigungsschrauben (250) als mit ihrem Hülsenende in den Pumpeninnenraum (10) hineinragende Schraubhülse (274) ausgebildet ist, daß der Temperaturfühler (246) einen im Profil T-förmigen Keramikträger (275) aufweist, der mit einem axialen Mittelteil (276) in der Schraubhülse (274) verläuft und am Hülsenende axial vorsteht und mit einem radialen Quersteg (277) den Hülsenkopf druckdicht übergreift, daß im Quersteg (277) zwei axiale Durchgangsbohrungen (258) vorgesehen sind, daß der Keramikträger (275) mittels zweier durch jeweils eine der Durchgangsbohrungen (258) hindurchgehender Montageschrauben (67) an der Leiterplatte (35) befestigt ist, daß die Durchgangsbohrungen (258) mit jeweils einer elektrisch leitenden, die zugleich der elektrischen Kontaktierung dienende Montageschraube (67) berührenden Anschlußhülse (260) ausgekleidet sind, daß die Anschlußhülsen (260) über Anschlußfahnen (264, 265) mit dem Sensorelement (277) verbunden sind und daß das Sensorelement (247) als Dickschichtwiderstand (269) auf dem aus der Schraubhülse (274) vorstehenden Mittelteilabschnitt des Keramikkörpers (275) und die Anschlußfahnen (264, 265) als Leiterbahnen auf Quersteg (277) und Mittelteil (276) aufgedruckt sind (Fig. 7).

9. Pumpe nach Anspruch 1, dadurch gekennzeichnet, daß das Stellwerk (29) mittels Befestigungsschrauben (350 ; 51) am Pumpengehäuse (11), vorzugsweise an einem den Stellwerkraum (36) umschließenden Stellwerkgehäuse (37), gehalten ist, daß eine der Befestigungsschrauben (350) mit ihrem Schaftende in den Pumpeninnenraum (10) hineinragt und eine auf der Stirnseite des Schraubenkopfes mündende, bis in das in den Pumpeninnenraum (10) hineinragende Schaftende reichende axiale Sackbohrung (380) aufweist und daß der Temperaturfühler (346) mit am oder nahe dem Sackgrund liegendem, vorzugsweise als NTC-Widerstand (361) ausgebildetem Sensorelement (347) in der Sackbohrung (380) angeordnet ist (Fig. 8).

10. Pumpe nach Anspruch 1, dadurch gekennzeichnet, daß der Stellwerkraum (436) von einem am Pumpengehäuse (11) angeflanschten, die Überlauföffnung (444) enthaltenden Stellwerkgehäuse (437) umschlossen ist, daß das Stellwerkgehäuse (437) von einer Bohrung (482, 483) durchzogen ist, die einerseits im Pumpeninnenraum (10) und andererseits in der Überlauföffnung (444) mündet, und daß die Bohrung (482, 483) durch eine im Stellwerkgehäuse (437) eingebrachte Aufnahmekammer (484) für den Temperaturfühler (446) hindurchführt, die zum Stellwerkraum (436) hin offen ist und mit Einsetzen des Temperaturfühlers (446) abgedichtet wird (Fig. 9).

11. Pumpe nach Anspruch 10, dadurch gekennzeichnet, daß das Stellwerkgehäuse (437) zweiteilig aus einem Grundgehäuse (438) und einem davon lösbaren Deckel (439) gebildet ist und daß die Überlauföffnung (444) und die Aufnahmekammer (484) für den Temperaturfühler (446) im Deckel (439) angeordnet sind (Fig. 9).

12. Pumpe nach Anspruch 10 oder 11, dadurch gekennzeichnet, daß der Temperaturfühler (447) einen Isolierstoffkörper (487) mit einem zwei axiale Durchgangsbohrungen (491, 492) für Montageschrauben aufweisenden Befestigungsflansch (488) und mit zwei davon im Abstand voneinander axial vorspringenden Höckern (489, 490) aufweist, die jeweils einen einerseits an den Höckerspitzen und andererseits auf der von den Höckern (489, 490) abgekehrten Stirnseite des Befestigungsflansches (488) vorstehenden Kontaktstift (493, 494) umschließen, daß das Sensorelement (447) als NTC-Widerstand (461) ausgebildet ist, der axial ausgerichtet zwischen den Höckern (489, 490) angeordnet ist und mit seinen Anschlüssen (462, 463, 448, 449) in die beiden Vorstehenden (493b, 494b) der Kontaktstifte (493, 494) an den Höckern (489, 490) eingesteckt und dort befestigt, z.B. verlötet, oder verquetscht, ist (Fig. 10 und 11).

13. Pumpe nach Anspruch 12, dadurch gekennzeichnet, daß die am Befestigungsflansch (488) vorstehenden Vorstehenden (493a, 494a) der Kontaktstifte (493, 494) als Steckstifte für mit Steckhülsen versehene, zu der Leiterplatte (35) führende elektrische Anschlußkabel ausgebildet sind (Fig. 10 und 11).

14. Pumpe nach Anspruch 10, dadurch gekennzeichnet, daß der Temperaturfühler (546) eine Edelstahlplatte (595) mit Emaillebeschichtung und eine die Edelstahlplatte (595) mit geringem Abstand überdeckende Isolierplatte (596) aufweist, daß die beiden Platten (595, 596) zueinander koaxiale Durchgangsbohrungen (591, 592, 591', 592') aufweisen und mit Befestigungsschrauben (598, 599), die berührungslos durch die Durchgangsbohrungen (591, 592) in der Edelstahlplatte (595) hindurchgeführt sind, an der Innenwand des Stellwerkgehäuses (437), die Öffnung der Aufnahmekammer (484) überdeckend, befestigt sind, daß das Sensorelement (547) als NTC-Dickschichtwiderstand (569) auf der von der Aufnahmekammer (484) abgekehrten Emailleschicht im Bereich der Öffnung der Aufnahmekammer (484) angeordnet und mit zwei auf der Emailleschicht zu je einer Durchgangsöffnung (591, 592) in der Edelstahlplatte (595) verlaufenden Leiterbahnen (564, 565), vorzugsweise aus Goldresinat, verbunden ist, und daß zwei mit zu der Leiterplatte (35) führenden elektrischen Anschlußkabeln verbundene, ösenartige Kabelschuhe (501, 502) mittels der durch sie isoliert hindurchtretenden Befestigungsschrauben (599, 500) zwischen der Edelstahlplatte (595) und der Isolierplatte (596), jeweils eine der Leiterbahnen (564, 565) kontaktierend, eingespannt sind (Fig. 12 und 13).

## Claims

1. Fuel injection pump for internal-combustion engines, having a pump interior space (10), which is contained in a pump casing and is filled with pressurized fuel which, during the suction stroke of a pump plunger (13) delimiting a pump working space, is fed to the pump working space (19), having a quantity adjustment member (28), arranged in the pump interior space, for the purpose of controlling the fuel injection quantity supplied under high pressure by the pump plunger, having a positioner space (36, 436) which is filled with fuel, separated from the pump interior space and connected to the latter only via a restriction, which positioner space is connected via a spill port to a relief line, preferably a fuel return leading to the fuel tank, having an electric positioner (29), arranged in the positioner space, for the purpose of actuating the quantity adjustment member, the electrical connections of the positioner being contacted on a printed circuit board in the positioner space, characterized in that arranged in the positioner space (36 ; 436) is an electric temperature detector (46 ; 146 ; 246 ; 346 ; 446 ; 546) having a temperature-sensitive sensor element (47 ; 147 ; 247 ; 347 ; 447 ; 547), preferably an NTC resistor, which, at least with its sensor element (47-547), dips indirectly or directly into a permanent fuel flow diverted from the pump interior space (10), and in that the electrical connecting leads of the temperature detector (46-546) are guided to the printed circuit board (35) and contacted there.

2. Pump according to Claim 1, characterized in that the positioner (29) is held on the pump casing (11), preferably on a positioner casing (37) surrounding the positioner space (36) and containing the spill port (44), by means of fastening bolts (50, 51), in that one of the fastening bolts (50) protrudes with its shank end into the pump interior space (10) and has an axial through bore (52), in that the temperature detector (46 ; 46' ; 146) has a hollow connector (53 ; 53' ; 153), which is arranged pressure-tightly between the front face of the bolt head and the spill port (44) and the inner cavity (54 ; 54' ; 154) of which, together with the through bore (52), forms a flow passage for the fuel, and in that the sensor element (47 ; 47' ; 147) of the temperature detector (46 ; 46' 146) is arranged in the flow passage (Fig. 2-6).

3. Pump according to Claim 2, characterized in that the axes of the spill port (44), connector (53 ; 53'; 153) and of the hollow fastening bolt (50) are in alignment, in that the connector (53 ; 53' ; 153) is designed with an approximately T-shaped profile and has a hollow cylindrical part (55 ; 55' ; 155) and a radial annular flange (56 ; 56' 156) integral with the latter, in which axial through bores (57, 58 ; 57', 58' ; 158) are provided, and in that the connector (53 ; 53' ; 153) is fixed to the printed circuit board (35) by means of two fitting screws (66, 67) passed through the through bores (57, 58 ; 57', 58' ; 158) (Figs. 2-6).

4. Pump according to Claim 3, characterized in that electrically conducting conductor barrels (59, 60; 59', 60' ; 160) are placed in the through bores (57, 58; 57', 58' ; 158), which conductor barrels are connected to terminal lugs (64, 65 ; 64', 65' ; 164, 165) for the sensor element (47 ; 47' ; 147) and are in contact with the fitting screws (66, 67) simultaneously serving for electrical contacting (Figs. 2-6).

5. Pump according to Claim 4, characterized in that the connector (53) is designed as a body of insulating material, in that the terminal lugs (64, 65) extend inside the annular flange (56) and emerge in the inner cavity (54) or at the front face of the hollow cylindrical part (55) and are there welded to the terminals (62, 63) of an axially oriented NTC resistor (61) forming the sensor element (47) (Fig. 3).

6. Pump according to Claim 4, characterized in that the connector (53') is designed as a body of insulating material, in that the terminal lugs (64', 65') inside the insulating body extend first of all radially in the annular flange (56') and then axially in the hollow cylindrical part (55') and protrude axially on the front face of the hollow cylindrical part (55'), said face preferably being turned away from the annular flange (56'), and in that the sensor element (47') is designed as an NTC thick-film resistor (69'), which is arranged on a ceramic wafer (68') and the terminals (62', 63') of which, which are designed as conductor tracks, are connected to the protrusions of the terminal lugs (64', 65') (Fig. 4).

7. Pump according to Claim 4, characterized in that the connector (153) is designed as a ceramic body, and in that the terminal lugs (164, 165) are applied to that front face of the radial annular flange (156) which is turned away from the hollow cylindrical part (155) as radially extending conductor tracks and the sensor element (147) is applied to said face as a thick-film resistor (169) spanning the opening of the axial through bore (52) of the fastening bolt (50) (Figs. 5 and 6).

8. Pump according to Claim 1, characterized in that the positioner (29) is held on the pump casing (11), preferably on a positioner casing (37) surrounding the positioner space (36), by means of fastening bolts (50, 51), in that one of the fastening bolts (250) is designed as a threaded sleeve (274) protruding with its sleeve end into the pump interior space (10), in that the temperature detector (246) has a ceramic carrier (275) of T-shaped profile which extends with an axial central part (276) in the threaded sleeve (274) and protrudes axially at the sleeve end and overlaps pressure-tightly with a radial transverse web (277) the sleeve head, in that two axial through bores (258) are provided in the transverse web (277), in that the ceramic carrier (275) is fixed to the printed circuit board (35) by means of two fitting screws (67) each passing through one of the through bores (258), in that the through bores (258) are each lined with a conductor barrel (260) touching a fitting screw (67) simultaneously serving for electrical contacting, in that the conductor barrels (260) are connected to the sensor element (277) via terminal lugs (264, 265), and in that the sensor element (247) is printed as a thick-film resistor (269) on the central portion of the ceramic body (275) protruding from the threaded sleeve (274) and the terminal lugs (264, 265) are printed as conductor tracks on transverse web (277) and central part (276) (Fig. 7).

9. Pump according to Claim 1, characterized in that the positioner (29) is held on the pump casing (11), preferably on a positioner casing (37) surrounding the positioner space (36), by means of fastening bolts (350 ; 51), in that one of the fastening bolts (350) protrudes with its shank end into the pump interior space (10) and has an axial blind bore (380) opening on the front face of the bolt head and extending into the shank end protruding into the pump interior space (10), and in that the temperature detector (346) is arranged in the blind bore (380) with the sensor element (347), preferably designed as an NTC resistor (361), situated at or near to the base of the blind bore (Fig. 8).

10. Pump according to Claim 1, characterized in that the positioner space (436) is surrounded by a positioner casing (437) flanged to the pump casing (11) and containing the spill port (444), in that the positioner casing (437) is passed through by a bore (482, 483) which opens, on the one hand, in the pump interior space (10) and, on the other hand, in the spill port (444), and in that the bore (482, 483) is passed through an accommodation chamber (484) for the temperature detector (446), which chamber is made in the positioner casing (437), is open towards the positioner space (436) and is sealed off with the insertion of the temperature detector (446) (Fig. 9).

11. Pump according to Claim 10, characterized in that the positioner casing (437) is formed of two parts, of a base casing (438) and a cover (439) which can be detached from the latter, and in that the spill port (444) and the accommodation chamber (484) for the temperature detector (446) are arranged in the cover (439) (Fig. 9).

12. Pump according to Claim 10 or 11, characterized in that the temperature detector (447) has a body (487) of insulating material with a fixing flange (488), having two axial through bores (491, 492) for fitting screws, and with two humps (489, 490) which project axially from the said flange at a distance from one another and each surround a contact pin (493, 494) protruding, on the one hand, at the hump tips and, on the other hand, on that front face of the fixing flange (488) which is turned away from the humps (489, 490), in that the sensor element (477) is designed as an NTC resistor (461), which is arranged oriented axially between the humps (489, 490) and with its terminals (462, 463, 448, 449) is inserted into the two protrusions (493b, 494b) of the contact pins (493, 494) on the humps (489, 490) and is fixed there, e.g. soldered or crimped (Figs. 10 and 11).

13. Pump according to Claim 12, characterized in that the protrusions (493a, 494a) of the contact pins (493, 494), which protrusions protrude at the fixing flange (488), are designed as plug-in pins for electrical connecting cables provided with push-on sleeves and leading to the printed circuit board (35) (Fig. 10 and 11).

14. Pump according to Claim 10, characterized in that the temperature detector (546) has a high-grade steel plate (595) with enamel coating and an insulating plate (596) covering over the high-grade steel plate (595) with slight clearance, in that the two plates (595, 596) have through bores (591, 592, 591', 592') coaxial to one another and are fixed to the inner wall of the positioner casing (437), covering over the opening of the accommodation chamber (484), with fastening screws (598, 599), which are passed in a non-contacting fashion through the through bores (591, 592) in the high-grade steel plate (595), in that the sensor element (547) is arranged as an NTC thick-film resistor (569) on the enamel layer turned away from the accommodation chamber (484), in the region of the opening of the accommodation chamber (484), and is connected to two conductor tracks (564, 565), preferably of gold resinate, each extending on the enamel layer to a through opening (591, 592) in the high-grade steel plate, and in that two eye-like cable terminals (501, 502) connected to electrical connecting cables leading to the printed circuit board (35) are clamped between the high-grade steel plate (595) and the insulating plate (596), in each case contacting one of the conductor tracks (564, 565), by means of the fastening screws (599, 500) passing through to them in insulated fashion (Fig. 12 and 13).

**Revendications**

1. Pompe d'injection de combustible pour moteurs à combustion interne avec une chambre interne de pompe (10) contenue dans un carter de pompe, et qui est remplie de combustible se trouvant sous pression, ce combustible étant amené à la chambre de travail (19) de la pompe lors de la course d'aspiration d'un piston de pompe (13) délimitant la chambre de travail de la pompe, avec un organe de réglage (28) de la quantité de combustible, disposé dans la chambre interne de la pompe pour commander la quantité d'injection de combustible refoulée sous haute pression par le piston de pompe, avec une chambre d'unité de réglage (36, 436) remplie de carburant, distincte de la chambre interne de la pompe et reliée à celle-ci uniquement par l'intermédiaire d'un étranglement, cette chambre d'unité de réglage étant reliée par l'intermédiaire d'un orifice de trop plein à une canalisation de décharge, de préférence une canalisation de retour du combustible aboutissant au réservoir de combustible, avec une unité électrique de réglage (29) disposée dans la chambre de l'unité de réglage pour actionner l'organe de réglage de la quantité de combustible, les raccordements électriques de l'unité de réglage étant connectés à une plaque de circuits imprimés dans la chambre d'unité de réglage, pompe d'injection de combustible caractérisée en ce que dans la chambre de l'unité de réglage (36, 436) est disposé un détecteur électrique de température (46, 146, 246, 346, 446, 546) avec un élément détecteur sensible à la température (47, 147, 247, 347, 447, 547), de préférence une résistance NTC, cet élément détecteur (47 à 547) étant plongé directement ou indirectement dans un flux permanent de combustible évacué de la chambre interne (10) de la pompe, et en ce que les liaisons électriques de raccordement du détecteur de température (46 à 546) sont amenées à la plaque de circuits imprimés (35) où elles sont connectées.

2. Pompe selon la revendication 1 caractérisée en ce que l'unité de réglage (29) est maintenue au moyens de vis de fixation (50, 51) sur le carter (11) de la pompe, de préférence sur un carter (37) d'unité de réglage, entourant la chambre d'unité de réglage (36) et contenant l'orifice de trop plein (44), en ce qu'une des vis de fixation (50) pénètre par l'extrémité de son fût dans la chambre interne (10) de la pompe et comporte un perçage traversant axial (52), en ce que le détecteur de température (46, 46', 146) comporte une pièce de jonction creuse (53, 53', 153) disposée de façon étanche à la pression entre la face frontale de la tête de vis et l'orifice de trop plein (44), et dont l'espace creux interne (54, 54', 154) forme conjointement avec le perçage traversant (52) un canal d'écoulement pour le combustible, et en ce que l'élément détecteur (47, 47', 147) du détecteur de température (46, 46', 146) est disposé dans ce canal d'écoulement (figures 2 à 6).

3. Pompe selon la revendication 2, caractérisée en ce que les axes de l'orifice de trop plein (44), de la pièce de jonction (53, 53', 153), et de la vis de fixation creuse (50) coïncident, en ce que la pièce de jonction (53, 53', 153) est profilée à peu près en forme de T et comporte une partie cylindrique creuse (55, 55', 155) et une bride annulaire radiale (56, 56', 156) venue d'une seule pièce avec cette partie cylindrique creuse et dans laquelle sont prévus des perçages traversants axiaux (57, 58, 57', 58', 158), et en ce que la pièce de jonction (53, 53', 153) est fixée sur la plaque de circuits imprimés (35) au moyen de deux vis de montage (66, 67) passant à travers les perçages traversants (57, 58, 57', 58', 158), (figures 2 à 6).

4. Pompe selon la revendication 3, caractérisée en ce que dans les perçages traversants (57, 58, 57', 58', 158) sont insérées des douilles de raccordement électriquement conductrices (59, 60, 59', 60', 160) qui sont reliées à des cosses de raccordement (64, 65, 64', 65', 164, 165) pour l'élément détecteur (47, 47', 147) et qui sont en contact avec les vis de montage (66, 67) assurant simultanément la connexion électrique (figures 2 à 6).

5. Pompe selon la revendication 4, caractérisée en ce que la pièce de jonction (53) est réalisée sous la forme d'une structure en matière isolante, en ce que les cosses de raccordement (64, 65) s'étendent à l'intérieur de la bride annulaire (56) et sortent dans l'espace creux interne (54) ou bien sur la face frontale de la partie cylindrique creuse (55), où elles sont soudées avec les extrémités de raccordement (62, 63) d'une résistance NTC (61) orientée axialement et constituant l'élément détecteur (47) (figure 3).

6. Pompe selon la revendication 4, caractérisée en ce que la pièce de jonction (53') est réalisée sous la forme d'une structure en matière isolante, en ce que les cosses de raccordement (64', 65') s'étendent à l'intérieur de cette structure isolante, tout d'abord radialement dans la bride annulaire (56') et ensuite axialement dans la partie cylindrique creuse (55'), et font saillie axialement sur une face frontale, de préférence opposée à la bride annulaire (56'), de la partie cylindrique creuse (55'), et en ce que l'élément détecteur (47') est réalisé sous la forme d'une résistance NTC à couche épaisse (69') disposée sur une plaquette de céramique (68'), et dont les extrémités de raccordement (62', 63') réalisées sous la forme de pistes conductrices sont reliées aux saillies des cosses de raccordement (64', 65') (figure 4).

7. Pompe selon la revendication 4, caractérisée en ce que la pièce de jonction (153) est réalisée sous la forme d'une structure en céramique et en ce que sur la face frontale, opposée à la partie cylindrique creuse (155), de la bride annulaire radiale (156), les cosses de raccordement (164, 165) sont rapportées sous la forme de pistes conductrices s'étendant radialement et l'élément détecteur (147) est rapporté sous la forme d'une résistance à couche épaisse (169) s'étendant sur l'ouverture du perçage traversant axial (52) de la vis de fixation (50) (figures 5 et 6).

8. Pompe selon la revendication 1, caractérisée en ce que l'unité de réglage (29) est maintenue par des vis de fixation (50, 51) sur le carter (11) de la pompe, de préférence sur un carter (37) d'unité de réglage entourant la chambre (36) de l'unité de réglage, en ce qu'une des vis de fixation (250) est réalisée sous la forme d'une douille filetée (274) pénétrant par son extrémité dans la chambre interne (10) de la pompe, en ce que le détecteur de température (246) comporte un support en céramique (275) profilé en forme de T, dont une partie médiane axiale (276) s'étend dans la douille filetée (274) et fait saillie axialement à l'extrémité de cette douille et dont une barrette transversale radiale (277) recouvre de façon étanche à la pression, la tête de la douille, en ce qu'il est prévu dans la barrette transversale (277) deux perçages traversants axiaux (258), en ce que le support en céramique (275) est fixé sur la plaque de circuits imprimés (35) par deux vis de montage (67) passant à travers chacun des perçages traversants (258), en ce que ces perçages traversants (258) sont chacun équipés d'une douille de raccordement (260) électriquement conductrice qui sont en contact avec les vis de montage (67) assurant en même temps la connexion électrique, en ce que les douilles de raccordement (260) sont reliées à l'élément détecteur (277) par l'intermédiaire de cosses de raccordement (264, 265) et en ce que l'élément détecteur (247) est imprimé sous la forme d'une résistance à couche épaisse (269) sur le tronçon de la partie médiane de la structure en céramique (275) faisant saillie hors de la douille filetée (274) tandis que les cosses de raccordement (264, 265) sont imprimées sous la forme de pistes conductrices sur la barrette transversale (277) et la partie médiane (276) (figure 7).

9. Pompe selon la revendication 1, caractérisée en ce que l'unité de réglage (29) est maintenue par des vis de fixation (350, 51) sur le carter (11) de la pompe, de préférence sur un carter (37) d'unité de réglage entourant la chambre d'unité de réglage (36), en ce qu'une des vis de fixation (350) pénètre par l'extrémité de son fût dans la chambre interne (10) de la pompe et comporte un perçage axial borgne (380) débouchant sur la face frontale de la tête de la vis et s'étendant jusque dans l'extrémité du fût faisant saillie dans la chambre interne (10) de la pompe, et en ce que le détecteur de température (346) avec son élément détecteur (347) réalisé de préférence sous la forme d'une résistance NTC (361) et placé au fond du perçage borgne et au voisinage de ce fond, est disposé dans le perçage borgne (380) (figure 8).

10. Pompe selon la revendication 1, caractérisée en ce que la chambre (436) de l'unité de réglage est entourée par un carter (437) d'unité de réglage bridé sur le carter (11) de la pompe et contenant l'orifice de trop plein (444), en ce que le carter (437) de l'unité de réglage est traversée par un perçage (482, 483) qui débouche, d'une part dans la chambre interne (10) de la pompe, et, d'autre part, dans l'orifice de trop plein (444), et en ce que le perçage (482, 483) traverse une chambre réceptrice (484) ménagée dans le carter (437) de l'unité de réglage pour le détecteur de température (446), cette chambre étant ouverte vers la chambre (436) de l'unité de réglage et étant fermée de façon étanche par la mise en place du détecteur de température (446) (figure 9).

11. Pompe selon la revendication 10, caractérisée en ce que le carter (437) de l'unité de réglage est réalisé en deux parties constituées par un carter de fond (438) et un couvercle (439) susceptible d'être séparé de ce carter de fond, et en ce que l'orifice de trop plein (444) et la chambre réceptrice (484) pour le détecteur de température (446) sont disposés dans le couvercle (439) (figure 9).

12. Pompe selon la revendication 10 ou la revendication 11, caractérisée en ce que le détecteur de température (447) comporte un corps en matière isolante (487) avec une bride de fixation (488) comportant deux perçages traversants axiaux (491, 492) pour des vis de montage, et avec deux protubérances (489, 490) faisant saillie axialement à partir de cette bride, à une certaine distance l'une de l'autre, cette protubérance entourant respectivement une broche de contact faisant saillie, d'une part, sur la pointe des protubérances, et d'autre part, sur la face frontale, opposée à cette protubérance (489, 490) de la bride de fixation (488), en ce que l'élément détecteur (447) est réalisé sous la forme d'une résistance NTC (461), qui est disposée en étant orientée axialement entre les protubérances (489, 490) et qui est enfichée par ses raccordements (462, 464, 448, 449) dans les deux saillies (493b, 494b) des broches de contact (493, 494) sur les protubérances (489, 490) où elle est fixée, par exemple en étant brasée ou écrasée, (figures 10 et 11).

13. Pompe selon la revendication 12, caractérisée en ce que les saillies (493a, 494a) des broches de contact (493, 494) sur la bride de fixation (488) sont réalisées sous la forme de broches d'enfichage pour des câbles électriques munis de douilles d'enfichage et aboutissant à la plaque de circuits imprimés (35), (figures 10 et 11).

14. Pompe selon la revendication 10, caractérisée en ce que le détecteur de température (546) comporte une plaque en acier spécial (595) avec un revêtement d'émail et une plaque isolante (596) recouvrant à une faible distance la plaque en acier spécial (595), en ce que les deux plaques (595, 596) comportent des perçages traversants co-axiaux les uns aux autres (591, 592, 591', 592') et sont fixés à la paroi interne du carter (437) de l'unité de réglage, en recouvrant l'orifice de la chambre réceptrice (484) par des vis de fixation (598, 599) qui sont enfilées sans contact à travers les perçages traversants (591, 592) dans la plaque en acier spécial (595), en ce que l'élément détecteur (547) réalisé sous la forme d'une résistance NTC à couche épaisse (569) est disposé dans la zone de l'orifice de la chambre réceptrice (484) sur la couche d'émail opposée à la chambre réceptrice (484), et est relié à deux vis conductrices (564, 565), de préférence en résinat d'or, s'étendant chacune sur la couche d'émail vers un orifice de passage (591, 592) dans la plaque en acier spécial (595), et en ce que deux cosses terminales de câbles (501, 502) en forme d'oeillets reliées à des câbles de raccordement électriques aboutissant à la plaque de circuits imprimés (35) sont serrées, en étant respectivement en contact avec une des pistes conductrices (564, 565), entre la plaque en acier spécial (595) et la plaque isolante (596) par des vis de fixation (599, 500) les traversant en étant isolées par rapport à elles (figures 12 et 13).

Fig.1

EP 0 316 581 B1

Fig.2

Fig.3

Fig.4

15

Fig. 5

10

Fig. 6

Fig.7

Fig.8

Fig. 9

439 481 482 484 447 444 486 405 437

436

438 485 446

10 483

EP 0 316 581 B1

Fig.10

Fig.11

Fig.12

Fig.13